# EUROPÄISCHE PATENTSCHRIFT

(11) **EP 3 807 517 B1**
(45) Veröffentlichungstag und Bekanntmachung des Hinweises auf die Patenterteilung: **03.08.2022**
(21) Anmeldenummer: 19731131.9
(22) Anmeldetag: 25.05.2019
(51) Int. Cl.: F03B 17/06, F03B 3/04, F03D 9/25, F03D 1/04

(54) **TURBINE**
TURBINE
TURBINE

(30) Priorität: 16.06.2018 DE 102018114484
(43) Veröffentlichungstag der Anmeldung: 21.04.2021
(73) Patentinhaber: Wünstel, Franz, 87600 Kaufbeuren (DE)
(72) Erfinder: Wünstel, Franz, 87600 Kaufbeuren (DE)
(74) Vertreter: Rößner, Ulrike
(86) Internationale Anmeldenummer: PCT/DE2019/100462
(87) Internationale Veröffentlichungsnummer: WO 2019/238159

(56) Entgegenhaltungen:
- WO-A1-2009/079787
- WO-A2-03/023223
- DE-C- 757 548
- FR-A1- 3 034 818

## Beschreibung

Die Erfindung betrifft eine Turbine, umfassend eine stationäre Turbinen-Welle, einen Schacht zum Einströmen eines flüssigen oder gasförmigen Mediums in einen im Inneren der Turbine angeordneten Durchströmungsbereich sowie eine im Durchströmungsbereich angeordnete Beschaufelung eines stationären Leitwerks und eines Laufrads, wobei das stationäre Leitwerk eine innerhalb einer die Turbinen-Welle umgreifenden Nabe angeordnete Tragstruktur sowie eine hierzu radial nach außen hin anschließende und in den Durchströmungsbereich der Turbine hineinragende Beschaufelung umfasst, welche zur Leitung des im Durchströmungsbereich strömenden Mediums auf die Beschaufelung des Laufrads eingerichtet ist und wobei das Laufrad eine die Turbinen-Welle ringförmig umgreifende Tragstruktur umfasst und um eine zur Durchströmungsrichtung des Mediums im wesentlichen parallele Drehachse drehbar gelagert ist, sowie umfassend erste und zweite Mittel zur generatorischen Erzeugung eines Stromflusses, welche als eine Mehrzahl von elektrisch leitfähigen Spulenkörpern sowie eine Mehrzahl von Magneten ausgeführt sind und bei rotatorischer Bewegung des Laufrades um dessen Drehachse jeweils miteinander in elektrischer Wechselwirkung stehen.

Gattungsgemäße Turbinen sind aus dem Stand der Technik in großer Anzahl bekannt. Sie werden zur Erzeugung von Strom unter Ausnutzung der kinetischen Energie des die Turbine durchströmenden Mediums eingesetzt.

Insbesondere auf dem Gebiet der Windenergieanlagen stellen derartige Turbinen eine sehr sinnvolle und vorteilhafte Alternative gegenüber den in weit überwiegender Zahl gebräuchlichen Anlagen mit frei im anströmenden Wind drehbaren Rotoren dar. Gattungsgemäße Windturbinen sind in deutlich kleinerer Baugröße realisierbar als die allseits bekannten und gebräuchlichen Rotor-Anlagen. Somit können gattungsgemäße Windturbinen sehr leicht in vorhandene bauliche Anlagen integriert werden, was den Flächenverbrauch durch Windenergieanlagen deutlich reduzieren würde. Bedingt durch ihre bauart-typische Einhausung gehen von gattungsgemäßen Windturbinen auch deutlich geringere negative Umweltbeeinflussungen aus als von herkömmlichen Rotor-Anlagen. Dies betrifft insbesondere negative Aspekte wie Schattenwurf auf die Umgebung, Geräuschentwicklung (sowohl innerhalb als auch außerhalb des für den Menschen hörbaren Bereiches) und Vogelschlag.

Zur Erzeugung von elektrischem Strom dienen in an sich bekannter Weise Generatoren, deren Funktionsweise auf dem ebenso an sich bekannten Faradayschen Gesetz der elektromagnetischen Induktion beruht, wonach die Bewegung eines elektrischen Leiters in einem Magnetfeld zur Induktion eines Stromflusses in diesem elektrischen Leiter führt.

DE 30 15 756 A1 offenbart eine Windturbine mit einem Generator, der über eine gemeinsame Welle mechanisch mit dem Laufrad der Turbine gekoppelt ist. Diese Welle ist in zwei Lagerpunkten abgestützt, welche mittels Abspannungen in Form von im Durchströmungskanal eingebauten Blechen realisiert sind. Die serielle Hintereinanderschaltung von Turbinenlaufrad und Generator auf derselben Welle bedingt eine lange Welle mit weit auseinander liegenden Lager-Abstützungen, welche anfällig für Verformungen der Welle - insbesondere Durchbiegung - ist, da der Generator ausschließlich durch die Welle getragen wird. Insbesondere bei hohen Drehzahlen treten sehr schnell Schäden durch Lagerverschleiß oder Ermüdungsbrüchen der Welle auf.

Zur Vermeidung dieser Nachteile lehrt US 2006/0002786 A1 eine Windturbine, bei der die Antriebswelle des Generators baulich von der Drehwelle des Turbinenlaufrades bzw. Turbinenwelle getrennt ist. Über ein Getriebe wird die Bewegungsenergie von der Turbinenwelle auf die Generator-Antriebswelle übertragen. Beide Wellen können dadurch kürzer ausgeführt sein und die Durchbiegung beider Wellen ist deutlich reduziert. Allerdings führt das Getriebe zu Übertragungsverlusten, wodurch sich der Gesamtwirkungsgrad der Anlage verschlechtert.

Einen ähnlichen technischen Ansatz offenbart CH 625 018 A, gemäß der die Turbine eine Luftaustrittszone aufweist, die durch eine hohle Austrittshaube begrenzt ist, in welcher der Generator und ein den Generator antreibendes Getriebe untergebracht sind. Auch hier sind Übertragungsverluste und eine Verschlechterung des Gesamtwirkungsgrades der Anlage die Folge. Zudem benötigt die Austrittshaube einen großen Bauraum, wodurch die Windturbine sehr sperrig wird und sich nur sehr schlecht in bestehende Bauwerke integrieren lässt.

Aus FR 3 034 818 A1, WO 2003/023223 A2 und WO 2009/079787 A1 sind jeweils eine Turbine bekannt mit einem auf den Außenumfang des Laufrades aufgesetzten Rotor, der mit einem im Außengehäuse der Turbine integrierten ringförmigen Gegenstück generatorisch zusammenwirkt. Solche Turbinen weisen große QuerschnittsAbmessungen auf. Zudem wirken sich die großen rotierenden Massen am Außenumfang des Laufrades nachteilig auf dessen Laufruhe aus und können die Turbine zu starken Eigenfrequenzen anregen.

Aus DE 757 548 A ist eine Turbine mit einem Laufrad bekannt, dessen Nabe als ein stromlinienförmiges Lagergehäuse ausgeführt ist, welches eine stationäre Hohlwelle und einen vom Laufrad angetriebenen elektrischen Generator aufweist, wobei das Laufrad starr mit dem Außenläufer der elektrischen Maschine verbunden und der Innenläufer der elektrischen Maschine fest mit der stationären Hohlwelle verbunden ist. Allerdings benötigt die Integration des Generators in die Nabe des Laufrades einen großen Bauraum, so dass die Nabe einer solchen Turbine und damit auch die Turbine als solche einen großen Querschnitt aufweisen.

Die Aufgabe der vorliegenden Erfindung besteht somit darin, eine Turbine, umfassend eine stationäre Turbinen-Welle, einen Schacht zum Einströmen eines flüssigen oder gasförmigen Mediums in einen im Inneren der Turbine angeordneten Durchströmungsbereich sowie mindestens eine im Durchströmungsbereich angeordnete Beschaufelung eines stationären Leitwerks und eines Laufrads, wobei das stationäre Leitwerk eine innerhalb einer die Turbinen-Welle umgreifenden Nabe angeordnete Tragstruktur sowie eine hierzu radial nach außen hin anschließende und in den Durchströmungsbereich der Turbine hineinragende Beschaufelung umfasst, welche zur Leitung des im Durchströmungsbereich strömenden Mediums auf die Beschaufelung des Laufrads eingerichtet ist und wobei das Laufrad eine die Turbinen-Welle ringförmig umgreifende Tragstruktur umfasst und um eine zur Durchströmungsrichtung des Mediums im wesentlichen parallele Drehachse drehbar gelagert ist, sowie umfassend erste und zweite Mittel zur generatorischen Erzeugung eines Stromflusses, welche als eine Mehrzahl von elektrisch leitfähigen Spulenkörpern sowie eine Mehrzahl von Magneten ausgeführt sind und bei rotatorischer Bewegung des Laufrades um dessen Drehachse jeweils miteinander in elektrischer Wechselwirkung stehen, bereitzustellen, welche geringe Abmessungen aufweist, so dass sie sich leicht und unauffällig in bestehende Bauwerke, wie z.B. Dachfirste oder Brüstungen im Bereich von Dächern, integrieren lässt.

Dies wird erfindungsgemäß dadurch erreicht, dass die ersten Mittel zur generatorischen Erzeugung eines Stromflusses an der Tragstruktur der Beschaufelung des stationären Leitwerks und die zweiten Mittel zur generatorischen Erzeugung eines Stromflusses an der Tragstruktur des Laufrads im jeweils selben radialen Abstand zur Drehachse angebracht sind, sowie die Tragstruktur des rotierenden Laufrads sich mittels Wälzlagern gegen die Turbinen-Welle oder gegen die Tragstruktur der Beschaufelung des stationären Leitwerks rotatorisch drehbar abstützt. Das stationäre Leitwerk umfasst eine Tragstruktur innerhalb einer die Turbinen-Welle umgreifenden Nabe sowie eine hierzu radial nach außen hin anschließende und in den Durchströmungsbereich der Turbine hineinragende Beschaufelung in Form eines stationären Schaufelgitters. Das rotierende Laufrad umfasst eine Tragstruktur, gebildet aus einem äußeren und einem inneren Trägerblech, welche die Turbine-Welle ringförmig umgreifen, durch einen vertikalen Steg miteinander verbunden sind und sich mittels Wälzlagern gegen die Turbine-Welle oder die Tragstruktur des Leitwerks rotatorisch drehbar abstützen. Die ersten Mittel zur generatorischen Erzeugung eines Stromflusses sind an der Tragstruktur des stationären Leitwerks angebracht. Die zweiten Mittel zur generatorischen Erzeugung eines Stromflusses sind an der Tragstruktur des Laufrads angebracht. Dabei sind diese ersten und zweiten Mittel zur generatorischen Erzeugung eines Stromflusses derart am Leitwerk und am Laufrad angebracht, dass zwischen ihnen nur ein geringer Luftspalt freibleibt und sich die am Laufrad angebrachten zweiten Mittel während einer Drehung des Laufrads um seine Drehachse entlang der am Leitwerk um diese Drehachse angebrachten ersten Mittel bewegen.

Auf diese Weise werden die zur generatorischen Stromerzeugung erforderlichen Bauteile, d.h. Magnete und Statorwicklungen, direkt in den aus Leitwerk und Laufrad gebildeten Turbinensatz integriert und die ohnehin vorhandene Relativbewegung zwischen Laufrad und Leitwerk vorteilhaft zur Induktion eines Stromflusses in den Spulenkörpern genutzt. Dies ermöglicht eine generatorische Erzeugung von Strom mittels in den Turbinensatz integrierter Bauteile ohne weiterer Übertragungsmittel (wie z.B. Welle oder Getriebe). Das Anbauen eines Generators, sei es durch eine Verlängerung der Turbinenwelle, sei es unter Zwischenschaltung eines Getriebemittels, wird hierdurch entbehrlich. Auf diese Weise können Turbinen realisiert werden, die eine sehr kurze Baulänge aufweisen. Diese wird im Wesentlichen nur noch durch die Baulänge des Turbinensatzes, d.h. durch die in Durchströmungsrichtung betrachtete Bautiefe von Leitwerk und Laufrad, bestimmt. Derartig kompakte Turbinen lassen sich sehr leicht und optisch unauffällig an exponierten Stellen hoher Gebäude anbauen. Ebenso können erfindungsgemäße Turbinen wegen ihrer geringen Abmessungen auch an Masten ehemaliger Rotoranlagen angebracht werden. Durch den Wegfall der bislang üblichen Getriebemittel wird zudem der Wirkungsgrad einer erfindungsgemäßen Windturbine erhöht, ohne dass diese hierzu größer dimensioniert werden müsste. Unter der Leitung des strömenden Mediums auf die Laufradschaufeln ist in diesem Zusammenhang dessen Umlenkung in Richtung auf die Beschaufelung des Laufrades hin zu verstehen, so dass sich an der Laufrad-Beschaufelung optimale Strömungsverhältnisse einstellen, die ein maximales Drehmoment am Laufrad erzeugen.

Die erfinderische Idee sieht des weiteren vor, dass sowohl die ersten Mittel zur generatorischen Erzeugung eines Stromflusses am stationären Leitwerk als auch die zweiten Mittel zur generatorischen Erzeugung eines Stromflusses am Laufrad im jeweils selben radialen Abstand zur Drehachse angeordnet sind. Die ersten und zweiten Mittel zur generatorischen Erzeugung eines Stromflusses sind also am Leitwerk bzw. am Laufrad jeweils ringförmig um die Drehachse angeordnet. Auf diese Weise werden die ersten und zweiten Mittel zur generatorischen Erzeugung eines Stromflusses in eine in Bezug auf die Durchströmungsrichtung der Turbine serielle Anordnung zueinander gebracht. Eine solche serielle Anordnung ist besonders platzsparend und weist einen geringen Querschnitt auf, so dass eine Turbine mit geringen Querschnittsmaßen realisierbar ist. Dennoch ist auf diese Weise - trotz geringem Durchmesser - eine große Anzahl von Polpaaren möglich, da über den Umfang des jeweiligen Rings viele einzelne Spulenkörper bzw. Magnete anordenbar sind, die mit ihrem jeweils in einem Drehwinkelabstand von 180° gegenüberliegenden Gegenstück zu einem Polpaar verschaltbar sind.

Gemäß einer sehr sinnvollen Weiterentwicklung des erfinderischen Grundkonzepts ist das Laufrad direkt am Leitwerk und gegenüber diesem rotatorisch bewegbar gelagert. Dies kann beispielsweise mittels spezieller Befestigungsvorrichtungen erfolgen, die starr in das (ebenfalls stationäre) Leitwerk integriert sind, und in denen jeweils ein Wälzlager gelagert ist, welches um eine zur Drehachse des Laufrads parallele Drehachse rotatorisch beweglich ist. Somit bildet das Laufrad einen ringförmigen und direkt am Leitwerk gelagerten Körper aus. Auf diese Weise kann die radiale Erstreckung des Laufrades gering gehalten werden, wodurch insbesondere bei Laufrädern mit großen Durchmessern eine deutliche Reduzierung der rotierenden Masse des Laufrades erzielt wird. Dies resultiert in einer geringeren Anfälligkeit des Laufrades für Unwuchten oder Verformungen während des Betriebs.

Bei der Auswahl des konkreten Ortes der Anbringung von Spulenkörpern und Magneten am Leitwerk bzw. Laufrad der Turbine sowie der Ausführung von deren dortiger Anbringung wird der Fachmann insbesondere darauf achten, dass Unwuchten am rotierenden Laufrad vermieden werden. Somit wird der Fachmann diese Details situationsabhängig und in Abhängigkeit von der konkreten Konstruktionsweise von Leitwerk und Laufrad von Fall zu Fall abweichend realisieren, so dass an dieser Stelle auf weitere Einzelheiten hierzu aus Gründen der Übersichtlichkeit der Patentanmeldung verzichtet werden kann.

Gemäß einer ersten Ausführungsvariante des erfinderischen Grundkonzepts sind die ersten Mittel zur generatorischen Erzeugung eines Stromflusses am stationären Leitwerk als elektrisch leitfähige Spulenkörper und die zweiten Mittel zur generatorischen Erzeugung eines Stromflusses am Laufrad als Magnete ausgeführt.

Eine hierzu alternative Ausführungsvariante sieht vor, dass die ersten Mittel zur generatorischen Erzeugung eines Stromflusses am stationären Leitwerk als Magnete und die zweiten Mittel zur generatorischen Erzeugung eines Stromflusses am Laufrad als elektrisch leitfähige Spulenkörper ausgeführt sind.

Das erfinderische Konzept sieht ferner vor, dass je zwei Magnete zu einem Polpaar verschaltet sind, wobei die Polpaare unabhängig voneinander in Abhängigkeit von der Drehgeschwindigkeit des Laufrads einzeln oder gruppenweise zu- und abschaltbar sind. Auf diese Weise wird eine einfache Möglichkeit zur Regelung des im Turbinensatz erzeugten Stroms realisiert. Die Stromerzeugung ist auf diese Weise leicht an unterschiedliche Windverhältnisse bzw. Durchströmungsmengen in der Turbine anpassbar. Bei geringer Windstärke bzw. wenig Wind sind nur wenige Polpaare schaltbar bzw. für die generatorische Stromerzeugung aktivierbar. Da jedes aktivierte Polpaar gemäß der Grundregeln der Elektrodynamik eine die Drehbewegung des Laufrades hemmende Kraft in das Laufrad induziert, bestünde sonst die Gefahr, dass bei geringer Windstärke und somit geringer Drehgeschwindigkeit des Laufrades eine Hemmung des Laufrades verursacht würde, die unter ungünstigen Umständen bis zum Stillstand des Laufrads führen kann. Diese Gefahr wird durch die Zu- bzw. Abschaltbarkeit der Polpaare in Abhängigkeit von der Windstärke bzw. der in der Turbine herrschenden Strömungsverhältnisse beseitigt. Insbesondere ermöglicht diese erfindungsgemäße Regelbarkeit eines generatorisch ausgerüsteten Turbinensatzes das Einstellen eines in Bezug auf die Durchströmungsverhältnisse optimierten Drehzahlbereiches der Turbine. Die Turbine kann somit auch bei stetig wechselnden Anströmungsverhältnissen bzw. Windverhältnissen durch die erfindungsgemäß geregelte Zu- oder Abschaltung von Polpaaren stets in einem bezogen auf die Strömungsverhältnisse am Laufrad optimalen Drehzahlbereich bzw. im Bereich des maximalen vom Laufrad erzeugbaren Drehmoments betrieben werden. Dies erhöht zusätzlich den Gesamtwirkungsgrad der Anlage. Somit wird die Leistungsfähigkeit einer erfindungsgemäßen Turbine erhöht, ohne dass diese hierzu größer dimensioniert werden müsste.

Die Erfindung sieht ferner vor, dass die Magnete als Permanentmagnete oder Elektromagnete ausgebildet sind.

Die vorliegende Erfindung wird nachfolgend anhand eines Ausführungsbeispiels und dazugehöriger Zeichnungen näher erläutert. Es zeigen:
- Figur 1:: Längsschnitt durch eine erfindungsgemäße Windturbine (erste Ausführungsform)
- Figur 2:: Querschnittsansicht des Laufrads (4) gemäß Schnitt A-A
- Figur 3:: Längsschnitt durch eine erfindungsgemäße Windturbine mit alternativer Lagerung des Laufrads (4) (zweite Ausführungsform)

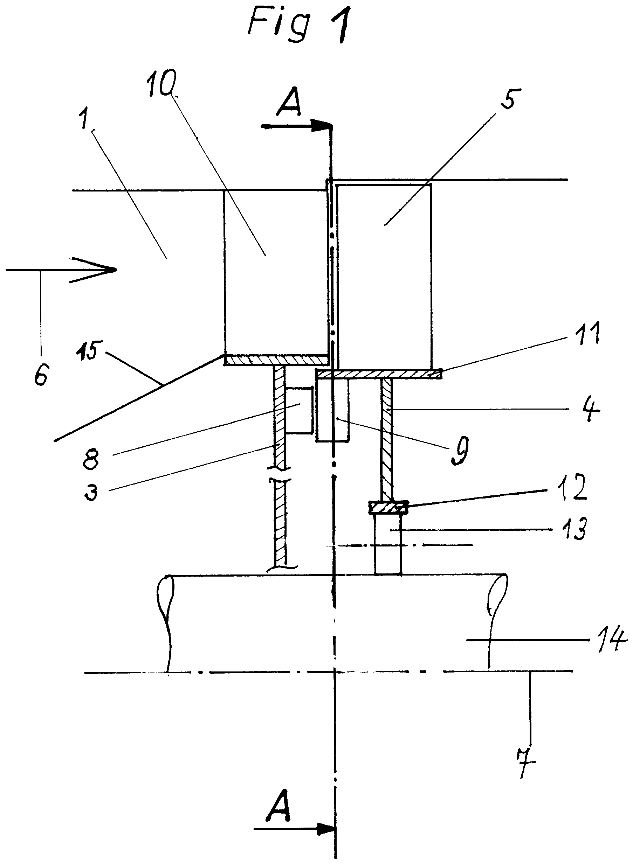

In Figur 1 ist eine erste Ausführungsform einer erfindungsgemäßen Windturbine in einem zur Durchströmungsrichtung (6) parallelen Längsschnitt dargestellt. Die Durchströmungsrichtung (6) ist im wesentlichen parallel zur Drehachse (7) des Laufrades ausgebildet. Die Windturbine umfasst einen Einströmschacht (1), der sich in Form eines Ringspalts in Richtung auf eine in einem Durchströmungsbereich der Windturbine angeordnete Beschaufelung hin verjüngt. Eine Verjüngung in Form einer Düse stellt eine hierzu alternative, in Figur 1 aber nicht dargestellte Ausführungsvariante dar. Ein in Durchströmungsrichtung (6) nach der Beschaufelung angeordneter Diffusor bzw. Ausströmschacht ist in Figur 1 aus Gründen der Übersichtlichkeit nicht dargestellt. Ein die Turbine durchströmendes Medium wird auf diese Weise von der Anströmkante des Einströmschachts (1) der Turbine bis in die Beschaufelung hinein beschleunigt, um den dortigen Energieumsatz anzuheben. Im Ausströmschacht wird dann wiederum so viel Energie wie möglich von der am Austritt aus der Beschaufelung noch vorhandenen kinetischen Energie in statische Energieformen umgewandelt. Die Beschaufelung der Turbine umfasst ein feststehendes Leitwerk in Form eines stationären Schaufelgitters (10) sowie eine in Durchströmungsrichtung (6) dem Leitwerk nachgelagerte und um die Drehachse (7) drehbar gelagerte Laufrad-Beschaufelung (5). Der Durchströmungsbereich ist derjenige Teil der Windturbine, der vom feststehenden Schaufelgitter (10) des Leitwerks sowie von den Schaufeln (5) des Laufrades ausgefüllt wird. In an sich aus dem Stand der Technik bekannter Weise erfährt das durchströmende Medium durch das stationäre Schaufelgitter (10) einen Drall und eine Ablenkung auf die Schaufeln (5) des Laufrads derart, dass das Laufrad in eine Drehbewegung um die Drehachse (7) versetzt wird.

Das stationäre Leitwerk umfasst eine Tragstruktur (3) im Bereich einer die stationäre Turbinen-Welle (14) umgreifenden Nabe (15) sowie ein hierzu radial außen anschließendes stationäres Schaufelgitter (10) im Durchströmungsbereich der Turbine. Aus Gründen der Übersichtlichkeit ist in Figur 1 bezüglich der Nabe (15) nur ein Teil von deren den Einströmschacht (1) begrenzenden Gehäuse dargestellt. Das rotierende Laufrad umfasst eine Tragestruktur, gebildet aus einem äußeren (11) und einem inneren (12) Trägerblech, welche die Turbine-Welle (14) ringförmig umgreifen, durch einen vertikalen Steg (4) miteinander verbunden sind und sich mittels Wälzlagern (13) gegen die stationäre Turbine-Welle (14) rotatorisch drehbar abstützen. Das äußere Trägerblech (11) trägt die radial nach außen gerichteten Laufradschaufeln (5). Auf der von den Laufradschaufeln (5) abgewandten und in Richtung auf die Drehachse (7) hin orientierten Innenseite des Trägerblechs (11) ist eine Mehrzahl von über den gesamten Umfang des Trägerblechs (11) verteilten Elektromagneten (9, 9') angebracht. In hierzu korrespondierender Lage (d.h. insbesondere mit demselben radialen Abstand zur Drehachse (7)) sind an der Tragstruktur des Leitwerks (3) eine Mehrzahl von Spulenkörpern (8) angeordnet. Diese Spulenkörper (8) bilden die für die generatorische Stromerzeugung erforderlichen Statorwicklungen. Je zwei zueinander um 180° gegenüber liegende Magnete sind zu einem Polpaar verschaltet, wobei jedes Polpaar einzeln (oder mehrere Polpaare gruppenweise) in Abhängigkeit von der Drehgeschwindigkeit des Laufrads zu- und abschaltbar ist. Bei rotatorischer Bewegung des Laufrades um die Drehachse (7) wird in diesen Statorwicklungen durch die ebenfalls um die Drehachse (7) rotierenden Magnetfelder der Elektromagnete (9, 9') ein Stromfluß induziert. Dieser wird mit bildlich nicht dargestellten Mitteln, wie z.B. Schleifringen oder Bürsten, abgegriffen und von der Windturbine mittels eines Kabels abgeführt.

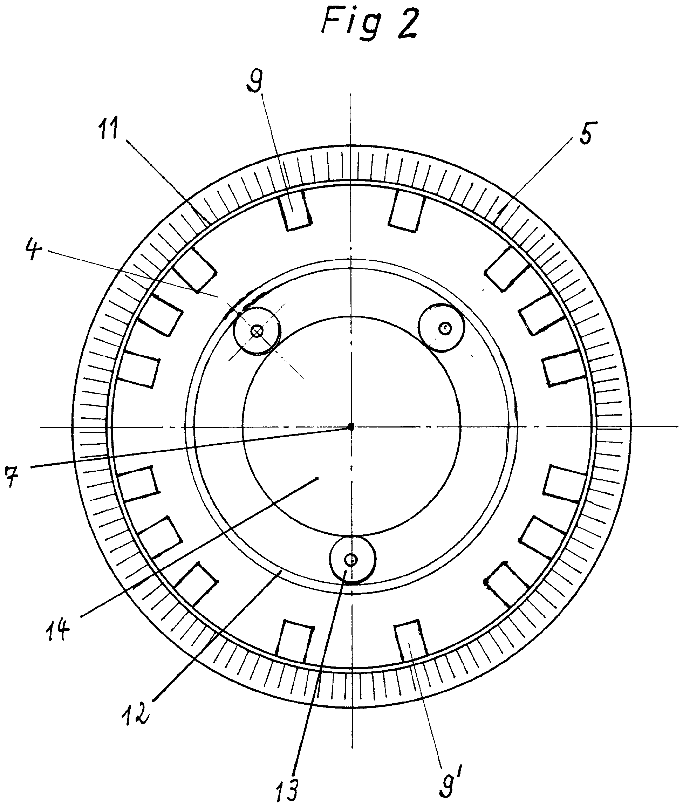

Aus Figur 2 ist ersichtlich, dass zu jedem ersten Elektromagnet (9) ein weiterer zweiter Elektromagnet (9') radial gegenüberliegend am äußeren Trägerblech (11) des Laufrades angeordnet ist. Beide Elektromagnete (9, 9') sind zu einem Polpaar zusammengeschaltet, welches mittels einer im Ausführungsbeispiel aus Gründen der Übersichltichkeit ebenfalls nicht dargestellten Regelungseinrichtung in Abhängigkeit von der sensorisch erfassten Drehgeschwindigkeit des Laufrades zu- bzw. abschaltbar ist. Im abgeschalteten Zustand dreht ein Polpaar unbestromt mit, d.h. nimmt nicht an der generatorischen Stromerzeugung teil. Durch eine derart geregelte Zu- oder Abschaltung der einzelnen Polpaare des Laufrades ist der Drehwiderstand des Laufrades einstellbar und somit eine in Bezug auf die Strömungsverhältnisse im Durchströmungsbereich der Windturbine bzw. auf die aktuell anfallende Windintensität optimierte Drehzahlsteuerung des Laufrades bzw. der Windturbine realisierbar. Die Darstellung in Figur 2 beschränkt sich aus Gründen der Klarheit auf drei Wälzkörper (13). Allerdings ist für den Fachmann ersichtlich, dass sich die Erfindung auch mit einer hiervon abweichenden, insbesondere größeren Anzahl von Wälzkörpern sehr vorteilhaft realisieren lässt.

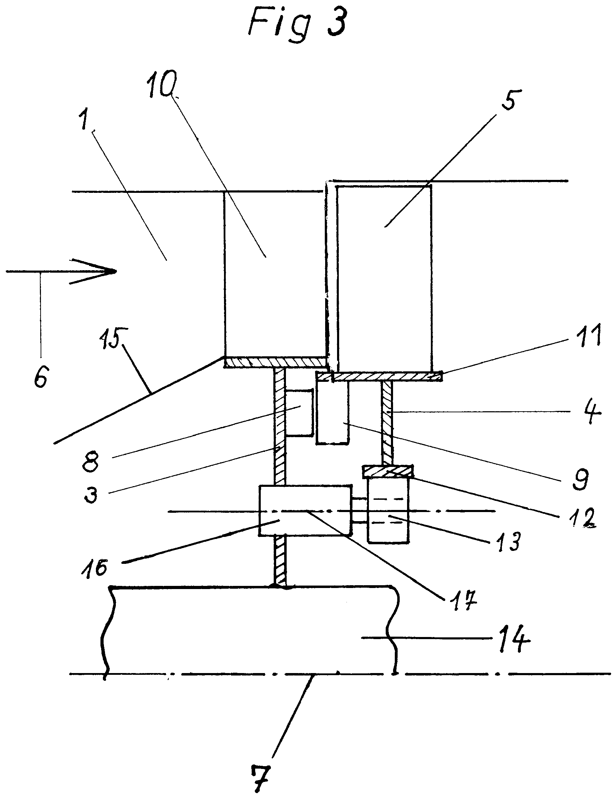

In Figur 3 ist eine zweite Ausführungsform einer erfindungsgemäßen Windturbine in einem zur Durchströmungsrichtung (6) parallelen Längsschnitt dargestellt, gemäß der das Laufrad (4) eine gegenüber der in den Figuren 1 und 2 dargestellten ersten Ausführungsform alternative Lagerung aufweist. Ebenso wie in dieser ersten Ausführungsform umfasst das rotierende Laufrad eine Tragestruktur, gebildet aus einem äußeren (11) und einem inneren (12) Trägerblech, welche die stationäre Turbine-Welle (14) ringförmig umgreifen, durch einen vertikalen Steg (4) miteinander verbunden und mittels Wälzlagern (13) abgestützt sind. Allerdings sind diese Wälzlager (13) abweichend zur ersten Ausführungsvariante nicht gegen die stationäre Turbinen-Welle (14) abgestützt, sondern mittels spezieller Befestigungsvorrichtungen (16) am stationären Leitwerk gelagert. Jedes Wälzlager (13) ist innerhalb der zugehörigen Befestigungsvorrichtung (16) rotatorisch beweglich um eine zur Drehachse (7) des Laufrads parallele Drehachse (17) gelagert. Somit bildet das Laufrad gemäß dieser zweiten Ausführungsform einen ringförmigen und direkt am Leitwerk gelagerten (und gegenüber diesem rotatorisch bewegbaren) Körper aus. Auf diese Weise kann der Abstand zwischen dem äußeren (11) und dem inneren (12) Trägerblech bzw. die radiale Erstreckung des Laufrades gering gehalten werden. Hierdurch wird insbesondere bei Laufrädern mit großen Durchmessern eine deutliche Reduzierung der rotierenden Masse des Laufrades - im Vergleich zur ersten Ausführungsform - erreicht. Dies resultiert in einer geringeren Anfälligkeit des Laufrades für Unwuchten oder Verformungen während des Betriebs.

### Bezugszeichenliste

- 1: Einströmschacht
- 3: Tragstruktur des Leitwerks
- 4: Vertikalsteg des Laufrads
- 5: Beschaufelung des Laufrads (4)
- 6: Durchströmungsrichtung
- 7: Drehachse des Laufrads
- 8: Spulenkörper
- 9, 9': Elektromagnet
- 10: Schaufelgitter des Leitwerks
- 11: äußeres Trägerblech des Laufrads
- 12: inneres Trägerblech des Laufrads
- 13: Wälzlager
- 14: stationäre Welle
- 15: Nabe
- 16: Befestigungsvorrichtung
- 17: Drehachse des Wälzlagers (13)

## Patentansprüche

1. Turbine, umfassend eine stationäre Turbinen-Welle (14), einen Schacht (1) zum Einströmen eines flüssigen oder gasförmigen Mediums in einen im Inneren der Turbine angeordneten Durchströmungsbereich sowie eine im Durchströmungsbereich angeordnete Beschaufelung (5, 10) eines stationären Leitwerks und eines Laufrads, wobei das stationäre Leitwerk eine innerhalb einer die Turbinen-Welle (14) umgreifenden Nabe (15) angeordnete Tragstruktur (3) sowie eine hierzu radial nach außen hin anschließende und in den Durchströmungsbereich der Turbine hineinragende Beschaufelung (10) umfasst, welche zur Leitung des im Durchströmungsbereich strömenden Mediums auf die Beschaufelung (5) des Laufrads eingerichtet ist, und wobei das Laufrad eine die Turbinen-Welle (14) ringförmig umgreifende Tragstruktur (4, 11, 12) umfasst und um eine zur Durchströmungsrichtung (6) des Mediums im wesentlichen parallele Drehachse (7) drehbar gelagert ist,
sowie umfassend erste und zweite Mittel zur generatorischen Erzeugung eines Stromflusses, welche als eine Mehrzahl von elektrisch leitfähigen Spulenkörpern (8) sowie eine Mehrzahl von Magneten (9) ausgeführt sind und bei rotatorischer Bewegung des Laufrades um dessen Drehachse (7) jeweils miteinander in elektrischer Wechselwirkung stehen,
**dadurch gekennzeichnet, dass**
die ersten Mittel zur generatorischen Erzeugung eines Stromflusses an der Tragstruktur (3) der Beschaufelung (10) des stationären Leitwerks und die zweiten Mittel zur generatorischen Erzeugung eines Stromflusses an der Tragstruktur (4, 11, 12) des Laufrads im jeweils selben radialen Abstand zur Drehachse (7) angebracht sind,
sowie die Tragstruktur (4, 11, 12) des rotierenden Laufrads sich mittels Wälzlagern (13) gegen die Turbinen-Welle (14) oder gegen die Tragstruktur (3) der Beschaufelung (10) des stationären Leitwerks rotatorisch drehbar abstützt.

2. Turbine nach Patentanspruch 1, **dadurch gekennzeichnet, dass** das Laufrad rotatorisch bewegbar am Leitwerk gelagert ist.

3. Turbine nach einem der Patentansprüche 1 bis 2, **dadurch gekennzeichnet, dass** die ersten Mittel zur generatorischen Erzeugung eines Stromflusses am stationären Leitwerk als elektrisch leitfähige Spulenkörper (8) und die zweiten Mittel zur generatorischen Erzeugung eines Stromflusses am Laufrad als Magnete (9) ausgeführt sind.

4. Turbine nach einem der Patentansprüche 1 bis 2, **dadurch gekennzeichnet, dass** die ersten Mittel zur generatorischen Erzeugung eines Stromflusses am stationären Leitwerk als Magnete und die zweiten Mittel zur generatorischen Erzeugung eines Stromflusses am Laufrad als elektrisch leitfähige Spulenkörper ausgeführt sind.

5. Turbine nach einem der Patentansprüche 1 bis 4, **dadurch gekennzeichnet, dass** je zwei Magnete (9, 9') zu einem Polpaar verschaltet sind, wobei die Polpaare unabhängig voneinander in Abhängigkeit von der Drehgeschwindigkeit des Laufrads (4) einzeln oder gruppenweise zu- und abschaltbar sind.

6. Turbine nach einem der Patentansprüche 1 bis 5, **dadurch gekennzeichnet, dass** die Magnete (9) als Permanentmagnete oder Elektromagnete ausgebildet sind.

## Claims

1. A turbine, comprising a stationary turbine spindle (14), a shaft (1) for flowing a liquid or gaseous medium into a through-flow region located in the interior of the turbine, and a blading (5, 10) of a stationary guide vane and an impeller, said blading (5, 10) being arranged in the through-flow region, wherein the stationary guide vane comprises a support structure (3) arranged within a hub (15) encompassing the turbine spindle (14) and a blading (10) radially outwardly adjoining the support structure and extending into the through-flow region of the turbine, which is set up to guide the medium flowing in the through-flow region onto the blading (5) of the impeller, and the impeller comprising a supporting structure (4, 11, 12) encompassing the turbine spindle (14) in an annular manner and is mounted rotatably about an axis of rotation (7) which is essentially parallel to the through-flow direction (6) of the medium,
and comprising first and second means for generating a current flow, said means are implemented as a plurality of electrically conductive coil bodies (8) as well as a plurality of magnets (9) and which are each in electrical interaction with one another during rotational movement of the impeller about its axis of rotation (7),
**characterized in that**
the first means for generating a current flow are mounted on the support structure (3) of the blading (10) of the stationary guide vane and the second means for generating a current flow are mounted on the support structure (4, 11, 12) of the impeller at the same radial distance from the axis of rotation (7) in each case,
and the support structure (4, 11, 12) of the rotating impeller is rotatably supported by means of antifriction bearings (13) against the turbine spindle (14) or against the support structure (3) of the blading (10) of the stationary guide vane.

2. The turbine according to patent claim 1, **characterized in that** the impeller is mounted on the guide vane so as to be movable in rotation.

3. The turbine according to one of the patent claims 1 to 2, **characterized in that** the first means for generating a current flow at the stationary guide vane are implemented as electrically conductive coil bodies (8) and the second means for generating a current flow at the impeller are implemented as magnets (9).

4. The turbine according to one of the patent claims 1 to 2, **characterized in that** the first means for generating a current flow at the stationary guide vane are realized as magnets and the second means for generating a current flow at the impeller are realized as electrically conductive coil bodies.

5. The turbine according to one of the patent claims 1 to 4, **characterized in that** two magnets (9, 9') each are connected to form a pole pair, wherein the pole pairs are connectable and disconnectable independently of one another as a function of the rotational speed of the impeller (4), either individually or in groups.

6. The turbine according to one of the patent claims 1 to 5, **characterized in that** the magnets (9) are realized as permanent magnets or electromagnets.

## Revendications

1. Turbine, comprenant un arbre de turbine stationnaire (14), un puits (1) pour l'entrée d'un milieu liquide ou gazeux dans une zone d'écoulement disposée à l'intérieur de la turbine, ainsi qu'un aubage (5, 10) d'un empennage stationnaire et d'un rotor disposés dans la zone d'écoulement, l'empennage stationnaire comprenant une structure porteuse (3) disposée à l'intérieur d'un moyeu (15) entourant l'arbre (14) de la turbine ainsi qu'un aubage (10) s'y raccordant radialement vers l'extérieur et pénétrant dans la zone d'écoulement de la turbine, qui est arrangé pour diriger le fluide s'écoulant dans la zone de passage sur l'aubage (5) du rotor, et le rotor comprenant une structure porteuse (4, 11, 12) entourant l'arbre de turbine (14) de manière annulaire et étant monté de manière à pouvoir tourner autour d'un axe de rotation (7) essentiellement parallèle à la direction de passage (6) du fluide,
ainsi que comprenant des premiers et des deuxièmes moyens pour la production génératrice d'un flux de courant, qui sont réalisés sous forme d'une pluralité de corps de bobines (8) électriquement conducteurs ainsi que d'une pluralité d'aimants (9) et qui, lors d'un mouvement de rotation du rotor autour de son axe de rotation (7), sont respectivement en interaction électrique les uns avec les autres,
**caractérisé en ce que**
les premiers moyens pour la génération générative d'un flux de courant sur la structure porteuse (3) de l'aubage (10) de l'empennage stationnaire et les deuxièmes moyens pour la production génératrice d'un flux de courant sur la structure porteuse (4, 11, 12) du rotor sont respectivement placés à la même distance radiale de l'axe de rotation (7),
ainsi que la structure porteuse (4, 11, 12) du rotor en rotation s'appuie en rotation au moyen de paliers à roulement (13) contre l'arbre de turbine (14) ou contre la structure porteuse (3) de l'aubage (10) de l'empennage fixe.

2. Turbine selon la revendication 1, **caractérisée en ce que** le rotor est monté de manière mobile en rotation sur l'empennage.

3. Turbine selon l'une des revendications 1 à 2, **caractérisée en ce que** les premiers moyens pour la production génératrice d'un flux de courant sur l'empennage stationnaire sont réalisés sous forme de corps de bobine (8) électriquement conducteurs et les deuxièmes moyens pour la production génératrice d'un flux de courant sur le rotor sont réalisés sous forme d'aimants (9).

4. Turbine selon l'une des revendications 1 à 2, **caractérisée en ce que** les premiers moyens pour la production génératrice d'un flux de courant sur l'empennage stationnaire sont réalisés sous forme d'aimants et les deuxièmes moyens pour la production génératrice d'un flux de courant sur le rotor sont réalisés sous forme de corps de bobines électriquement conducteurs.

5. Turbine selon l'une des revendications 1 à 4, **caractérisée en ce que** deux aimants (9, 9') sont respectivement connectés en une paire de pôles, les paires de pôles pouvant être connectées et déconnectées individuellement ou par groupes, indépendamment l'une de l'autre, en fonction de la vitesse de rotation du rotor (4).

6. Turbine selon l'une des revendications 1 à 5, **caractérisée en ce que** les aimants (9) sont réalisés comme des aimants permanents ou des électro-aimants.
